Europäisches Patentamt

European Patent Office

Office européen des brevets

(19)

(11) **EP 0 778 460 B1**

(12) **EUROPEAN PATENT SPECIFICATION**

(45) Date of publication and mention
of the grant of the patent:
**19.04.2000   Bulletin 2000/16**

(51) Int Cl.⁷: **G01L 1/24**

(21) Application number: **96308770.5**

(22) Date of filing: **04.12.1996**

(54) **A loadmeter employing birefringence to measure mechanical loads and stresses**

Belastungsmesser unter Verwendung von Doppelbrechung zum Messen von mechanischen Lasten und Spannungen

Capteur de charge employant la biréfringence pour la mesure des charges et tensions mécaniques

(84) Designated Contracting States:
**DE FR GB**

(30) Priority: **05.12.1995  US 8220**
**26.04.1996  US 638218**
**29.10.1996  US 738613**
**23.10.1996  US 736325**

(43) Date of publication of application:
**11.06.1997   Bulletin 1997/24**

(73) Proprietor: **JATOM SYSTEMS INC.**
**Kanata, Ontario, K2M 1X3 (CA)**

(72) Inventor: **Mason, Philip L.**
**Ottawa, Ontario, K1S 1W1 (CA)**

(74) Representative: **Williams, John Francis**
**WILLIAMS, POWELL & ASSOCIATES**
**4 St Paul's Churchyard**
**London EC4M 8AY (GB)**

(56) References cited:
**EP-A- 0 578 422**          **US-A- 5 400 131**

**Description**

This invention relates to a method and apparatus for measuring stress conditions that exist at a surface of a mechanical element.

This invention relates generally to the field of mechanical stress measurement and the determination of the loads creating these stresses in a mechanical element, and more specifically to the use of birefringent coatings to determine the magnitude and axial orientations of the stresses in a mechanical element and the use of these to calculate the load conditions acting on the element with particular application to rotating mechanical shafts.

This invention discloses a mechanical stress measurement system which utilizes a birefringent coating and spectral demodulation to determine the magnitude and angular orientation of the stresses in a mechanical element from which the loads acting on that mechanical element are calculated. The invention has particular relevance to the measurement of Torque, Axial and Bending loads in a shaft, whether they exist singularly or in combination, since it requires no electrical, mechanical or physical contact with the shaft, and since it is able to determine the magnitude and sense of the torque and axial loads, and the magnitude and plane of the bending load.

The concept of using a birefringent coating on a mechanical element is not new, neither is the concept of placing a coating on a shaft, however the use of a birefringent coating to accurately determine the stress magnitude and the angular orientations of the stress axes by using spectral and intensity modulations, to make these measurements in a noncontact manner using an automated system, and to use these to determine the singular or combination of loads acting on the coated element or shaft is new. This is achieved by making accurate measurements of the optical retardation for light passing through the birefringent coating and by determining the angular orientation of the optical axes at the surface of the coating. This disclosure describes the methods by which the stresses in a mechanical element are determined, the methods by which these are used to determine the loads acting on that mechanical element, and where this comprises part of a shaft, the methods by which the shaft loads are determined and further, it describes the apparatus used to implement the measurements.

A known approach to determining the stresses and thus the loads acting on a mechanical element is to instrument the element with strain gauges from which, depending on the types and orientations of the gauges, it is possible to determine the magnitude of the strain and the orientation of the strain axes from which, knowing the material properties of the element, the stresses and stress axes may be computed. However this approach requires the information relating to the electrical resistance changes in each of the strain gauge legs to be brought away from the element to an electrical measurement and processing system. Typically this is achieved by using wires plus, in the case of a shaft, a slip ring assembly, or by fully or partially processing the data on the element and using a radio transmitter/ receiver system to transfer the information away from the element. However this usually adds weight, complexity and imbalance to a shaft, and when the Torque load is the only desired quantity to be measured, can require that the instrumented section of the shaft be isolated from all other load influences. Thus a method by which the stress conditions of a shaft may be determined without recause to physical contact, nor to the use of radio apparatus, nor to the use of load isolation techniques can provide for increased flexibility and advantage over the existing methods. This invention utilizes the birefringence property exhibited by most transparent materials as a stress to optical phenomena transducer, light as the information transfer medium onto and back from the coated shaft and the normalization and demodulation of the spectral interference patterns created by combining light that has passed through the coating along one optical axis of the birefringent material with light that has passed along the orthogonal axis to accurately determine the magnitude of the optical retardation created by the coating, hence the stress difference between the stress axes, plus the orientation of these axes. Thus the need for any mechanical, electrical, magnetic or radio contact between the shaft and the measuring equipment is avoided.

EP-A-578422 discloses the use of two photodetectors, each sensitive to different wavelength bands, one being sensitive to the visible band and the other to the infrared band.

The present invention aims to provide methods for measuring the stress conditions in a mechanical element without contact with the element, and thereby, particularly when the mechanical element forms part of a rotating shaft, to determine the Torque, Axial and Bending loads acting on or through the shaft.

Accordingly the invention, by using birefringent coatings applied to the mechanical element, provides methods and apparatus for determining the stress magnitudes and stress axial directions in that element, in a manner which is both accurate and fast while not requiring operator intervention. This stress data is then used to determine the load conditions that give rise to the observed conditions and, for combined load situations, the Torque, Axial and Bending components which comprise the total load.

The method, as applied to shafts, consists of attaching a birefringent coating to the shaft, typically an epoxy cylinder or two half cylinders, illuminating it with circular polarized broad spectrum light, and collecting some of the light that has passed through the coating and has been reflected back from the reflective surface which forms the adhesive interface between the coating and the shaft. The reflected light is led to a set of linear polarizers whose axes are set at different angles. The light when passing and repassing through the birefringent coating may be considered as being constrained to pass along the orthogonal optical axes, for which, if the coating is under stress, the light velocity along one axis is different from that along the other. The polarizers combine the light emerging along each orthogonal optical axis, and since due to the velocity difference, light from one axis is retarded, in both space and time, with respect to light from the other axis, the two interfere. This generates an interference pattern the amplitude and phase of which varies according to the alignment of the polarizer axis to the optical axes, and the frequency of which varies according to the magnitude of the retardation. The interference patterns are realised by obtaining the spectral energy distributions for each polarizer channel using a spectrometer and solid state detector system, and subsequently binding the pixel intensities to form wavelength dependent intensity distribution arrays inside a computer used to control and process the data. These arrays are then normalised using a function equivalent to the spectral response that would occur in the absence of retardation, which as will be shown, may be constructed from the responses measured by the polarizers in the presence of retardation. These normalised or demodulated signals are themselves modulated in accordance with the magnitude of the retardation, in a manner which is unique and without ambiguity for each value of retardation and further, is not limited by the magnitude of the retardation. The use of curve fitting techniques provides for the extraction of the retardation value from any of the normalised or demodulated arrays, or from a combination of arrays. The phase of the demodulated signals also provides additional information as to which quadrant the principal optical axis, hence the principal stress axis, lies in relative to the axis of the polarizer generating the signal.

Consideration of the relative amplitudes from the two dominant signals, the phase of the signals, and the relative orientations of the polarizer axes, then permits the orientation of the principal optical axis to be calculated without ambiguity over a full 180° range. Thereafter the retardation magnitude and the stress/optical axes directions are used to compute the stress conditions on the shaft and the Torque, Axial and Bending load magnitudes acting on the shaft, the sense of these and the plane of Bending. This uses methods that have been developed, in accordance with this invention, for relating the measured optical conditions on the surface of the coating to the loads carried by the coating, and using developed load sharing methods, to loads carried by the shaft in the coated region, and thus to the loads carried by the shaft system in its entirety.

In accordance with a first aspect of the present invention, there is provided, a method for measuring stress conditions that exist at a surface of a mechanical element comprising the steps of:

(a) coating the mechanical element with a birefringent material such that strain conditions that exist at the surface of the mechanical element are caused also to exist on an inner surface of the befringent material adjacent to the mechanical element, and creating an interface between the birefringent material and the mechanical element which provides for the reflection of light that has passed through the birefringent material and where this reflective interface may be either the surface of the mechanical element or a material placed there to provide this reflection;

(b) illuminating the birefringent material coating the mechanical element with circular or elliptically polarized light having a broad spectrum;

(c) collecting, using an observer system comprising of optical elements, some of the light has passed through the birefringent material and that has been reflected back through the birefringent material and that has been reflected back through the birefringent material by the reflective interface, and passing this light through a polarizing means;

(d) spectrally separating some of that light that has passed through the ploarizing means, and determining the energy distribution across a separated spectrum as a function of either wavelength, frequency or physical positions on an energy measuring means;

(e) demodulating this energy distribution function;

(f) determining the magnitude of the birefringent in the birefringent material coating the mechanical element by consideration of the frequency or pattern of the demodulated energy distribution function;

(g) determining stress conditions existing at the surface of the mechanical element in its condition of being coated with the birefrigent material and stress conditions that would exist in the mechanical element under the same conditions but in the absence of the birefringent material by utilizing data related to the optical sensitivity of the birefringent material, the thickness of the birefringent coating the dimensions of the element, the material properties of the element, and the magnitude of the birefringent in the birefringent material coating the mechanical element.

In accordance with another aspect of the present invention, there is provided an apparatus for measuring stress conditions that exist at a surface of a mechanical element comprising:

(a) a birefringent coating applied to the mechanical element such that strain conditions that exist at the surface of the mechanical element are caused also to exist on the surface of the birefringent material adjacent to the mechanical element, and with an interface between the birefringent material and the mechanical element which provides for the reflection of light that has passed through the birefringent material and where this reflective interface may be either the surface of the mechanical element or a material placed there to provide this reflection;

(b) a source of circular of elliptically polarized light having a broad spectrum together with associated optical elements to direct this polarized light onto the birefringent material coating the mechanical element;

(c) an observer means comprising of optical elements for collecting some of the light that has passed through the birefringent material and that has been reflected back through the birefringent material by the reflective interface, and passing this light through a polarizing means;

(d) a spectral separation means disposed to receive as input the light that has passed through the polarizing means, and with the output from the spectral separation means being spectrally separated light, and with the spectral separation means disposed to relay this output spectrally separated light onto an energy measuring means comprising a plurality of detectors or elements and arranged such that each detector or element receives light energy from a different part of the separated spectra;

(e) an electronic interface means for measuring the energy received by each detector or element of the energy detector and for forming a representation of the spectrally separated light energy levels and storing this representation of the continuous spectral energy distribution in a storage means;

(f) a computational means for accessing the storage means, and in accordance with stored rpoutines that have been encoded in a manner suitable for controlling the computational means, demodulating the representation of the continuous spectral energy distribution, and determining the magnitude of the birefringent in the birefringent material coating the mechanical element by consideration of the frequency or pattern of the demodulated energy distribution function;

(g) further stored routines, that have been encoded in a manner suitable for controlling the computational means, for determining stress conditions existing at the surface of the mechanical element in its condition of being coated with the birefringent material and stress conditions that would exist in the mechanical element under the same conditions but in the absence of the birefringent material by utilizing data related to the optical sensitivity of the birefringent material, the thickness of the birefringent coating, the dimensions of the element, the material properties of the element, and the magnitude of the birefringent in the birefringent material coating the mechanical element.

A preferred embodiment of the present invention will now be described, by way of example only, with reference to the accompanying drawings in which:

**Figure 1** is a block diagram representation of the apparatus according to a preferred embodiment of the present invention;

**Figures 2a, 2b and 2c** are a set of typical spectral intensity patterns, **Figure 2a** shows a pattern when retardation is occurring, **Figure 2b** a pattern for light received by the observer in the absence of retardation, **Figure 2c** a created pattern replicating the pattern for no retardation but created from a plurality of observations made in the presence of retardation;

**Figure 3** illustrates a typical set of demodulated interference patterns, one for each of the three polarizers in the observer head;

**Figure 4** illustrates the intensity variations to be expected in light received by each of the three polarizers in the observer head, as a function of the changes in angle between the principal optical axis and the axis of each polarizer;

**Figure 5** is a block diagram representation of the apparatus according to the expansion of a preferred embodiment of the present invention, where multiple observer heads are used when, in addition to Torque and Axial loads, Bending loads are to be measured;

**Figures 6a and 6b** are diagrams illustrating the results of applying Bending loads to a shaft,

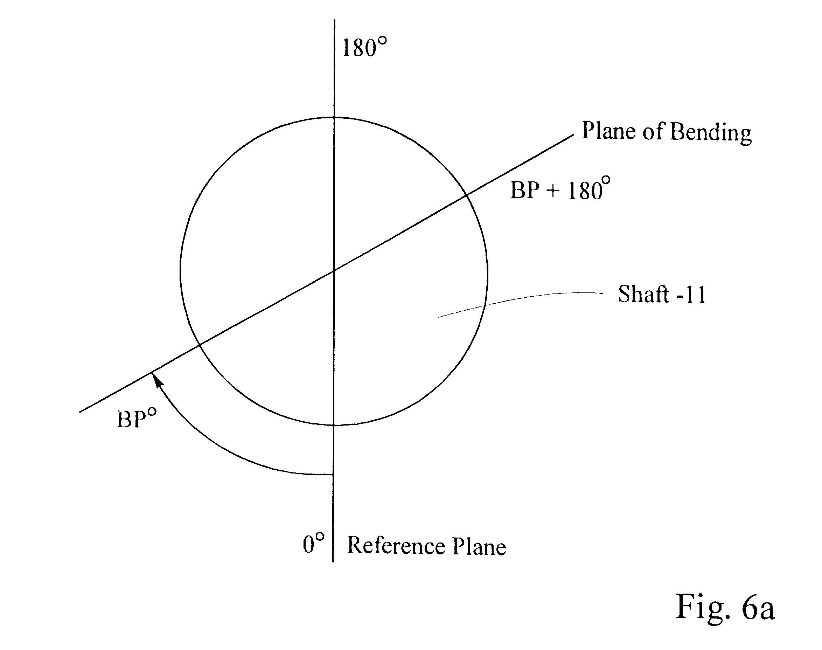

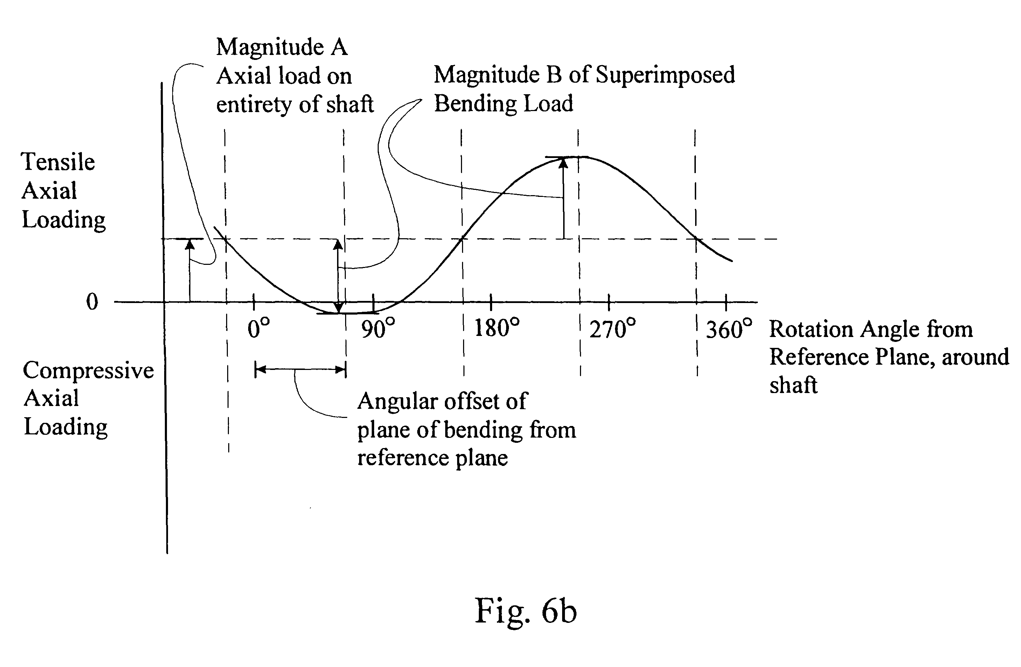

**Figure 6a** illustrates a typical bending plane, and **Figure 6b** illustrates the variation in Axial load around the periphery of a shaft subject to both Bending and Axial loads.

The object of the apparatus and methods disclosed in this invention is the measurement of mechanical loads acting on a mechanical element, and in particular as applied to a rotating or non-rotating shaft. The method computes these loads based on knowledge of the stresses on the surface of the shaft as determined from the optical behaviour of a birefringent coating applied to the shaft. This description will first describe how the magnitude of the optical behaviour, the retardation, may be determined, then how the optical axes directions on the surface of the optical coating may be determined, then how these may be used to determine the torque and axial loads acting on the shaft, and finally how bending loads, if present, and the axis of bending may be determined.

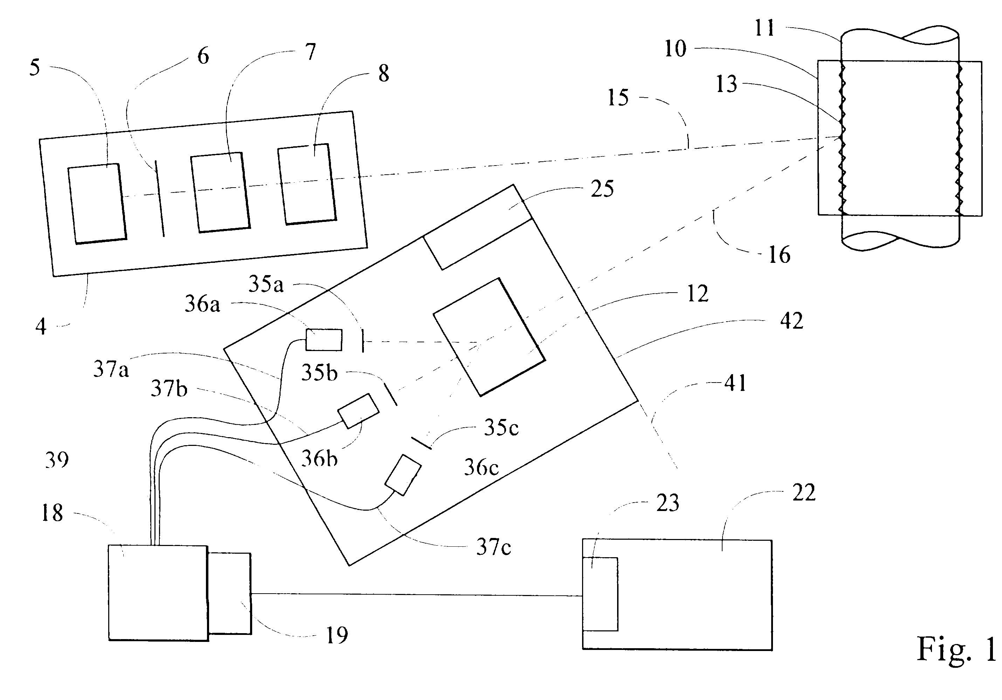

The method and apparatus for determining both the retardation and the orientation of the optical axes and from these the Torque and Axial loads will be described by way of a preferred embodiment of the present invention. Referring to Figure 1, an optical illuminating system 4, comprising a broad spectrum source 5, a linear polarizer 6, and a Fresnel rhomb 7, using a combination of focussing and directing optical elements 8, directs circular polarized light 15, onto the birefringent coating 10, which is applied to the shaft 11, using reflective adhesive 13. Light 16, that has passed through the birefringent coating, been reflected at the coating/shaft adhesive interface, is collected and directed by further optical elements 12, to a set of three linear polarizers 35a, 35b, and 35c, the axes of which are set at any known angular separation to each other, but preferably 120°, and at a known orientation offset to the reference axis 41, of the housing 42, supporting these optical elements and polarizers. The light directed onto the birefringent coating may be considered as passing through the coating, and repassing back after reflection, as if it were vectorially separated to constrain it to pass along the directions of the principal optical axis and the quadrature optical axis existing in the coating. Maxwell has shown that the refractive index of the coating, and correspondingly the velocity of the light passing through the coating varies from one axis to the other in accordance with the strain or stress differences experienced by the coating in the directions defined by the optical axes, and further that the strain and stress axes correspond to the optical axes. The linear polarizers 35a, 35b, and 35c, combine the quadrature components of some of the light emerging from the coating. The combined light that has passed through each polarizer is coupled into separate optical fibres 37a, 37b, and 37c, by separate coupling lens systems 36a, 36b, and 36c, and conveyed through the optical fibre bundle 39, to a holographic grating spectrometer 18, which is arranged to spectrally separate each input in parallel and convey the spectrally separated light onto the two dimensional detector of a solid state camera 19, such that each spectrally separated output occupies a separate and definable band across the detector. The intensity values of each pixel of the detector of the camera are measured, digitized and stored in the memory of a digital computer 22, under control of software running in that computer and using a digitizing interface card 23, installed in the computer. The camera is installed in the spectrometer so that the axis of the detector containing the greatest number of pixels is in the same direction as the direction of wavelength separation established by the holographic grating.

The relative angular separation between the rotation axis of the shaft, which will be used as the shaft reference axis, and the reference axis 41, of the housing 42, the **offset**, is established either directly using an inclinometer and sighting system 25, mounted on the housing, or by measuring the angle that each reference makes with respect to a common reference, eg. local horizontal, and calculating the relative angular separation.

The digitized intensity values obtained from each pixel are a measure of the spectral energy being received by each polarizer at the wavelength represented by the pixel location. Thus, within the computer, spectral intensity arrays $\mathbf{SP_0}$ **(i),** $\mathbf{SP_{120}}$ **(i)** and $\mathbf{SP_{240}}$ **(i), i = 1, ......,n,** can be created by summing the digitized intensity values for all the pixels in columns m + (i - 1).w to m + i.w - 1, for **i = 1, ......,n,** in rows $\mathbf{k_1}$ to $\mathbf{k_2}$ for array $\mathbf{SP_0}$, rows $\mathbf{k_3}$ to $\mathbf{k_4}$ for array $\mathbf{SP_{120}}$, and rows $\mathbf{k_5}$ to $\mathbf{k_6}$ for array $\mathbf{SP_{240}}$. Where column **m** is the first column of the detector receiving measurable intensities, column m + i.w - 1 being the last column with measurable received intensity, each group of summed columns being **w** columns wide; and where rows $\mathbf{k_1}$ to $\mathbf{k_2}$ receive the spectrally separated light originating from the linear polarizer combining means whose axis of polarization is set at the direction of $\mathbf{0°}$ **+ offset** from the housing reference, $\mathbf{k_3}$ to $\mathbf{k_4}$ receive spectrally separated light originating from linear polarizer combining means whose axis of polarization is set at $\mathbf{120°}$ **+ offset** from the reference, and $\mathbf{k_5}$ to $\mathbf{k_6}$ receive spectrally separated light originating from the linear polarizer combining means whose axis of polarization is set at $\mathbf{240°}$ **+ offset** from the reference. The wavelength of the spectrally separated light falling on the middle of each column group is $\lambda$, $\lambda$ **+** $\delta\lambda$ , $\lambda$ **+ 2**$\delta\lambda$, **.....,** $\lambda$ + (n - 1)$\delta\lambda$, where $\delta\lambda$ is the incremental wavelength between successive groups of columns. Accordingly, since each entry in the above, and subsequently to be derived, arrays represent a determinable wavelength, all subsequent arrays will be described in terms of the variable $\lambda$, eg. $\mathbf{SP_0}$ **(**$\lambda$**)**.

Spectral intensity arrays are obtained:

- 　initially and as part of the equipment set up for the case where no light enters the combining polarizers, as $\mathbf{SP_{0\text{-dark current}}}(\lambda)$, $\mathbf{SP_{120\text{-dark current}}}(\lambda)$ and $\mathbf{SP_{240\text{-dark current}}}(\lambda)$,
- 　again as part of the setup for the system when no retardation is being introduced by the birefringent material, or in its absence, as $\mathbf{SP_{0\text{-no retardation}}}(\lambda)$, $\mathbf{SP_{120\text{-no retardation}}}(\lambda)$, and $\mathbf{SP_{240\text{-no retardation}}}(\lambda)$,
- 　and for measurement purposes, when the birefringent material is inserting retardation, as $\mathbf{SP_{0\text{-retardation}}}(\lambda)$, $\mathbf{SP_{120\text{-retardation}}}(\lambda)$, and $\mathbf{SP_{240\text{-retardation}}}(\lambda)$.

The $\mathbf{SP_{0\text{-dark current}}}(\lambda)$, $\mathbf{SP_{120\text{-dark current}}}(\lambda)$ and $\mathbf{SP_{240\text{-dark current}}}(\lambda)$, are biases in the measured intensity readings occurring due to biases, offsets and defects in the camera, detectors and interface card. By measuring them as part of the set up, these biases can be removed from subsequent intensity measurements by subtraction as:

$$SP^*_{ii\text{-no retardation}}(\lambda) = SP_{ii\text{-no retardation}}(\lambda) - SP_{ii\text{-dark current}}(\lambda)$$

$$SP^*_{ii\text{-retardation}}(\lambda) = SP_{ii\text{-retardation}}(\lambda) - SP_{ii\text{-dark current}}(\lambda)$$

where ii = 0, 120 and 240.

The spectral intensity measurements $SP^*_{0\text{-no retardation}}(\lambda)$, $SP^*_{120\text{-no retardation}}(\lambda)$, and $SP^*_{240\text{-no retardation}}(\lambda)$ are used to form equalization correction functions:

$$EQ_{ii}(\lambda) = largest\ of\ \frac{SP^*_{0\text{-no retardation}}(\lambda)}{SP^*_{ii\text{-no retardation}}(\lambda)}$$

$$or\ \frac{SP^*_{120\text{-no retardation}}(\lambda)}{SP^*_{ii\text{-no retardation}}(\lambda)}$$

$$or\ \frac{SP^*_{240\text{-no retardation}}(\lambda)}{SP^*_{ii\text{-no retardation}}(\lambda)}$$

*on a* $\lambda$ *by* $\lambda$ *basis*, *where ii* = 0, 120 *and* 240.
which are applied to each spectral intensity measurement to compensate for variations in attenuation for light passing through the different combining devices and associated optical elements.

$$SP^{**}_{ii\text{-retardation}}(\lambda) = EQ_{ii}(\lambda) \cdot SP^*_{ii\text{-retardation}}(\lambda)$$

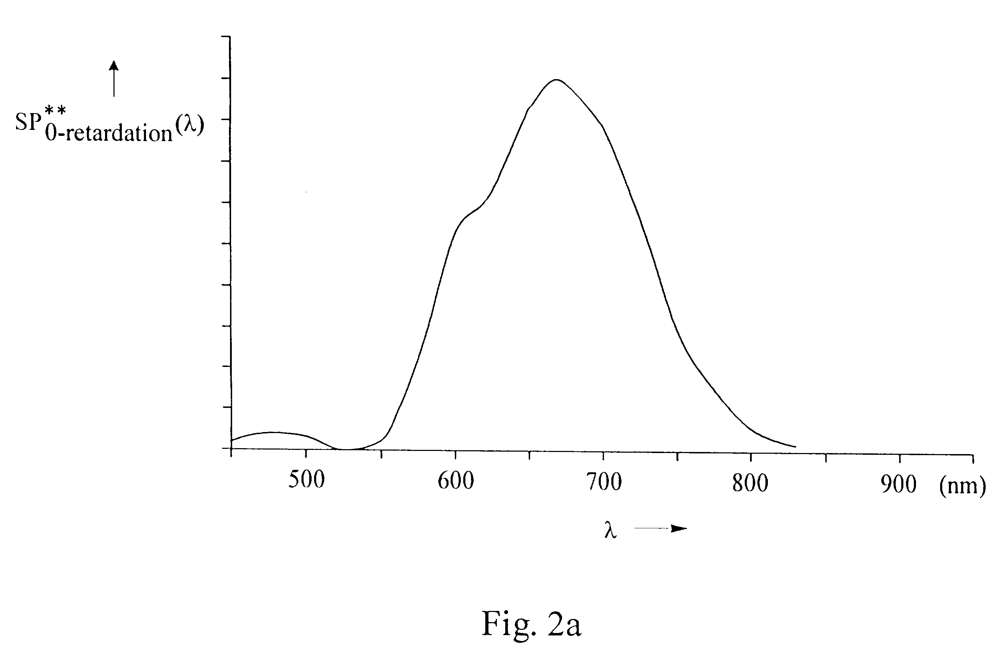

*where ii* = 0, 120 *and* 240.
a typical curve for which is illustrated in Figure 2a, and after the above channel attenuation

$$SP^{**}_{ii\text{-no retardation}}(\lambda) = EQ_{ii}(\lambda) \cdot SP^*_{ii\text{-no retardation}}(\lambda)$$

*for ii* = 0, 120 *and* 240.
hence

$$SP^{**}_{no\ retardation}(\lambda) = SP^{**}_{0\text{-}no\ retardation}(\lambda) = SP^{**}_{120\text{-}no\ retardation}(\lambda) = SP^{**}_{240\text{-}no\ retardation}(\lambda)$$

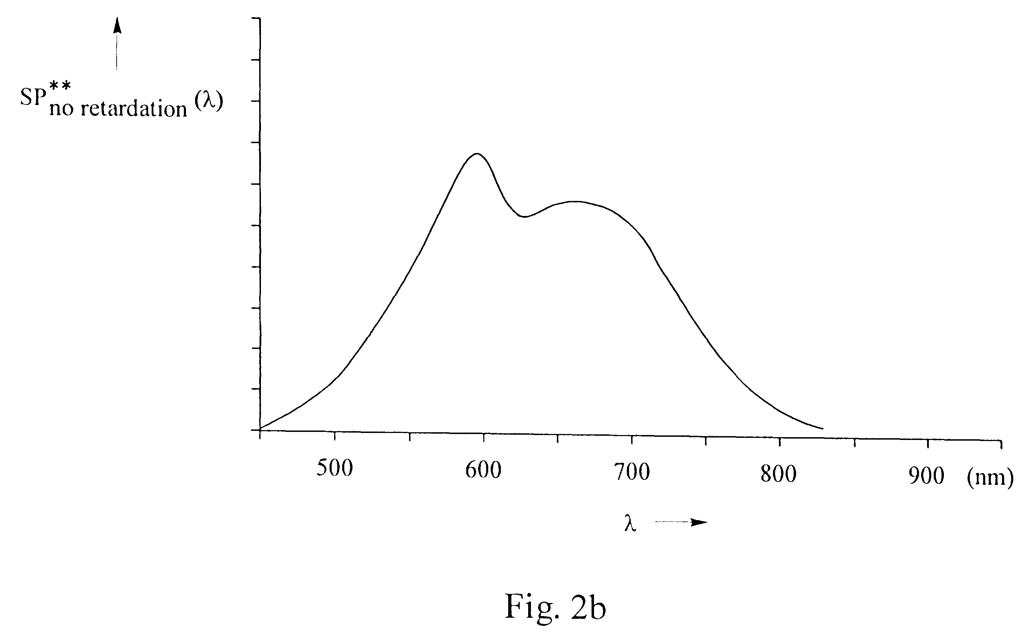

a typical curve for which is illustrated in Figure 2b, and thus the ratios

$$\frac{SP^{**}_{ii\text{-retardation}}(\lambda)}{SP^*_{ii\text{-no retardation}}(\lambda)} = \frac{SP^{**}_{ii\text{-retardation}}(\lambda)}{SP^*_{no\ retardation}(\lambda)}$$

may be formed for each of **ii = 0, 120 and 240**, and since both the numerator and denominator are subject to the same optical inefficiencies, attenuations, quantum efficiencies and source variations, these are removed.
Now to consider, with the aid of the Jones calculus the overall optical system and the processes that generate the interference patterns $SP^{**}_{ii\text{-retardation}}(\lambda)$ and $SP^*_{ii\text{-no retardation}}(\lambda)$. However instead of defining the reference direction for the analysis as the direction of the linear polarizer used in the circular polarizing function, the direction of the principal axis of the birefringent material will be used, and further recognize that the circular polarized light will pass equally along both of the axes of the birefringent material. Then if $E_{cp}$ is the vector describing the electric field of the input circular polarized light directed at the birefringent material, $|M_{bm}|$ is the matrix describing the birefringent material process introducing retardation between light passing along its orthogonal optical axes, $|M_{lp}|$ the matrix describing the linear polarizing process of the combining device, then $E_o$, the vector describing the electric field of the output from the combining linear polarizer is formed is:

$$E_o = |M_{lp}|\ |M_{bm}|\ E_{cp}$$

substituting and expanding for the case where $\phi$ retardation is introduced by the birefringent material, the axis of the combining linear polarizer is at angle $\alpha$ to the principal axis of the birefringent material and there is unity input intensity, then

$$\mathbf{E_o} = \frac{1}{\sqrt{2}} \begin{bmatrix} \cos\alpha & \sin\alpha \\ 0 & 0 \end{bmatrix} \begin{bmatrix} 1 & 0 \\ 0 & e^{i\phi} \end{bmatrix} \begin{bmatrix} 1 \\ i \end{bmatrix}$$

$$= \frac{1}{\sqrt{2}} \begin{bmatrix} \cos\alpha + ie^{i\phi}\sin\alpha \\ 0 \end{bmatrix}$$

Now the intensity, $\mathbf{I_o}$, is equal to the sum of the squares of the amplitudes of the electric components of the light wave, or in matrix form, the product of premultiplying $\mathbf{E_o}$ with its Hemetian adjoint, which is defined as the complex conjugate of the transpose of the matrix, thus:

$$\mathbf{I_o} = \mathbf{E_o}^{T*} \cdot \mathbf{E_o}$$

$$= \frac{1}{\sqrt{2}} \begin{bmatrix} \cos\alpha - ie^{-i\phi}\sin\alpha & 0 \end{bmatrix} \frac{1}{\sqrt{2}} \begin{bmatrix} \cos\alpha + ie^{i\phi}\sin\alpha \\ 0 \end{bmatrix}$$

$$= \frac{1}{2}\{1 + i\sin\alpha\cos\alpha(e^{i\phi} - e^{-i\phi})\}$$

$$= \frac{1}{2}\{1 - \sin(2\alpha)\sin\phi\}$$

For the condition of no retardation, $\phi = 0$, thus $\sin\phi = 0$, and $\mathbf{I_o}$ reduces to $\mathbf{I_o = 1/2}$, thus whatever angle the axis of the combining polarizer is set at, only half the input intensity will emerge. Therefore it follows that:

$$\frac{I_{o(retardation)}}{I_{o(no\ retardation)}} = \frac{1/2\ \{1 - \sin(2\alpha)\sin\phi\}}{1/2}$$

$$= 1 - \sin(2\alpha)\sin\phi$$

Thus there is a modulation function, $\sin\phi$, with amplitude controlled by $\sin(2\alpha)$, which is non-varying for a given alignment between the axes of the birefringent material and the axis of the combining polarizer. Now consider this expression and expand this applicable for each of the three combining devices, and also note that an axis oriented at $+240°$ is also oriented at $+60°$ and that at $+120°$ is also at $-60°$.

$$\frac{I_{o(0 - retardation)}}{I_{o(no\ retardation)}} = 1 - \sin(2\alpha)\sin\phi$$

$$\frac{I_{o(240 - retardation)}}{I_{o(no\ retardation)}} = 1 - \sin 2(\alpha + 60)\sin\phi$$

$$= 1 - \frac{\sin\phi}{2}\{\sqrt{3}\cos(2\alpha) - \sin(2\alpha)\}$$

$$\frac{I_{o(120 - retardation)}}{I_{o(no\ retardation)}} = 1 - \sin 2(\alpha - 60)\sin\phi$$

$$= 1 + \frac{\sin\phi}{2}\{\sin(2\alpha) + \sqrt{3}\cos(2\alpha)\}$$

these individual intensities may be summed:

$$\frac{I_{o(0 \text{ - retardation})} + I_{o(240 \text{ - retardation})} + I_{o(120 \text{ - retardation})}}{I_{o(\text{no retardation})}} = 1 - \sin (2\,\alpha) \sin \phi$$

$$+ 1 - \frac{\sqrt{3}}{2} \sin \phi \cos (2\,\alpha)$$

$$+ \frac{1}{2} \sin (2\,\alpha) \sin \phi + 1$$

$$+ \frac{\sqrt{3}}{2} \sin \phi \cos (2\,\alpha)$$

$$+ \frac{1}{2} \sin (2\,\alpha) \sin \phi$$

$$= 3$$

which provides that the output intensity at any angle under no retardation conditions can be determined by summing the output intensities measured through the three combining linear polarizers (each set at 120° to each other) for the condition where retardation is occurring. Thus a normalising or demodulation function can be created or produced each time a retardation measurement is made, thereby accommodating any time variations in the spectral performance of the optical system and in particular changes in both intensity and spectral content of the light source.

$$I_{o(\text{no retardation})} = \frac{I_{o(0 \text{ - retardation})} + I_{o(240 \text{ - retardation})} + I_{o(120 \text{ - retardation})}}{3}$$

And comparably:

$$SP^{\text{created}}_{o(\text{no retardation})}(\lambda) \equiv SP^{**}_{\text{no - retardation}}(\lambda)$$

$$= \frac{SP^{**}_{0 \text{ - retardation}}(\lambda) + SP^{**}_{240 \text{ - retardation}}(\lambda) + SP^{**}_{120 \text{ - retardation}}(\lambda)}{3}$$

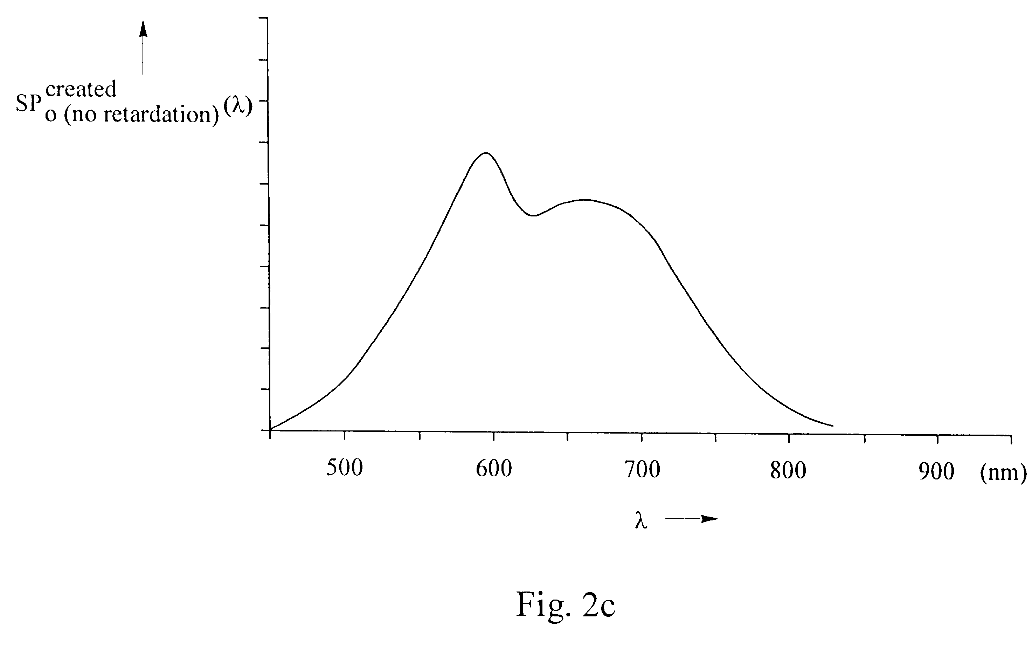

A typical created spectral intensity array is illustrated in Figure 2c. Hence each spectral intensity may be demodulated by normalising with respect to the created no retardation spectral intensity:

$$\frac{SP_{o(0 \text{ - retardation})}(\lambda)}{SP^{\text{created}}_{o(\text{no retardation})}(\lambda)} = 1 - \sin (2\,\alpha) \sin \frac{(2\,\pi\,R)}{\lambda}$$

$$\frac{SP_{o(240 \text{ - retardation})}(\lambda)}{SP^{\text{created}}_{o(\text{no retardation})}(\lambda)} = 1 - \sin 2\,(\alpha + \pi / 3) \sin \frac{(2\,\pi\,R)}{\lambda}$$

$$\frac{SP_{o(120 \text{ retardation})}(\lambda)}{SP^{\text{created}}_{o(\text{no retardation})}(\lambda)} = 1 - \sin 2\,(\alpha + 2\,\pi / 3) \sin \frac{(2\,\pi\,R)}{\lambda}$$

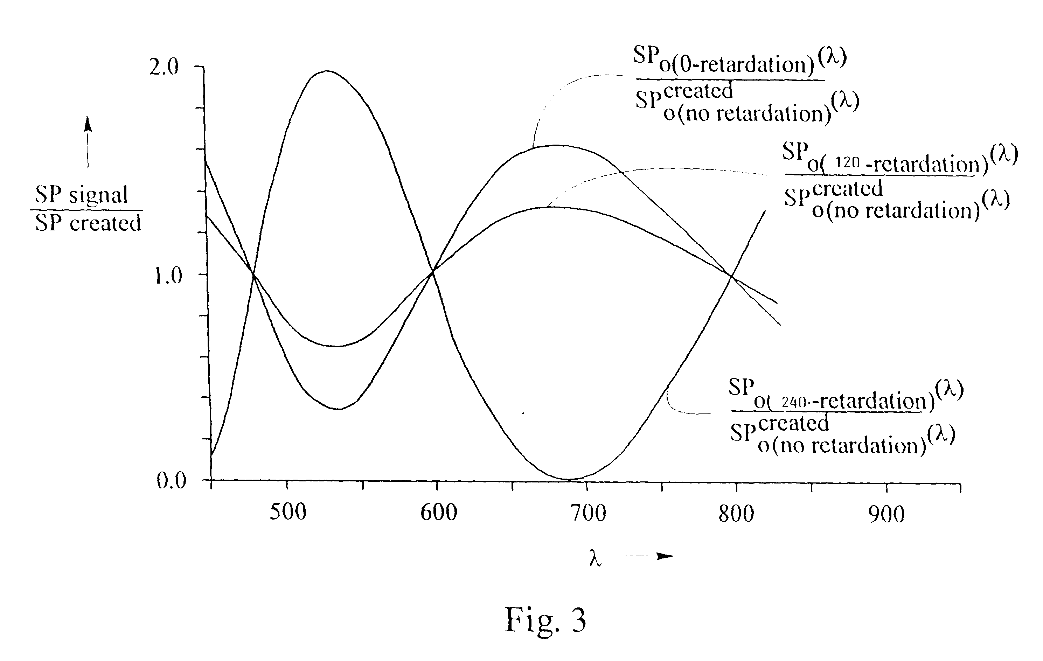

A typical set of these demodulated interference patterns is illustrated in Figure 3. These show that in practice there is one combining device providing the largest amplitude of modulation and the other two being of lesser amplitude and 180° out of phase. If the three demodulated interference patterns are summed to negate the phase difference as $SP_{\text{summed}} = SP_{\text{largest}} - (SP_{\text{medium}} + SP_{\text{smallest}})$, the value of retardation, **R**, can be extracted from this summed demodulated interference pattern in a variety of ways including curve fitting using a fit function of the form $F(\lambda_i) = 1 - S.A. \sin(2\pi R/\lambda_i)$, where **S** is a variable that may take the value of +1 or -1 to accommodate positive or negative values of $\alpha$, **A** is a variable in practice close to unity, and $\lambda_i$ is the midpoint wavelength for each array location.

When subject to loading, the birefringent coating exhibits optical axes which are in alignment to the stress axes, and which in the general case, rotate through the thickness of the coating. However the light emerging from the coating, following reflection at the shaft/coating interface, contains optical axes angular orientation information relating only to the outer surface. This angular orientation may be determined, in addition to other ways, by consideration of the relative intensities at one or more frequencies of light, as obtained by observing the returned light through a plurality of linear polarizers, the axes of which are set and maintained at known angular separations to each other and at known angular offsets from a convenient reference direction relating to the shaft, and in conjunction with the phase sense, **S**, of the spectral modulations of the light observed through each of the polarizers.

Consider the case where there are three polarizers, oriented with their polarization axes separated by 120°, and where the reference axis for the polarizers is the perpendicular to the shaft axis of rotation. Further, let one polarizer axis be aligned to the reference axis, a second aligned at -120° to the first ie at +60°, and the third aligned at +120° to the first, ie at -60°, with all angles measured positively counter clockwise around a line perpendicular to the plane tangential to the coating surface at the location where the reflected light emerges, thus the line also passes through the centre of the shaft. Also observe that the optical axes and polarizer axes are repetitive each 180°, and let the Principal optical axis be designated by PA, and its quadrature axis by QA, and let this principal axis lie at angle $\alpha$ to the 0° origin (ie 90° to the shaft axis) of the polarizer system. It follows that the angle of the quadrature axis **QA =** $\alpha \pm$ **90°**, and that $\alpha$ is required to be obtained uniquely and without ambiguity in the -90° to +90° range.

Now the demodulated spectral signals obtained from each of the three polarizers are,

$$I_1 / I_0 = 1 - \sin(2.\alpha).\sin\phi$$

for the polarizer set at 0° to the polarizer reference,

$$I_2 / I_0 = 1 - \sin2(\alpha + 60).\sin\phi$$

for the polarizer set at -60° (ie +120°) to the polarizer reference, and

$$I_3 / I_0 = 1 - \sin2(\alpha - 60).\sin\phi$$

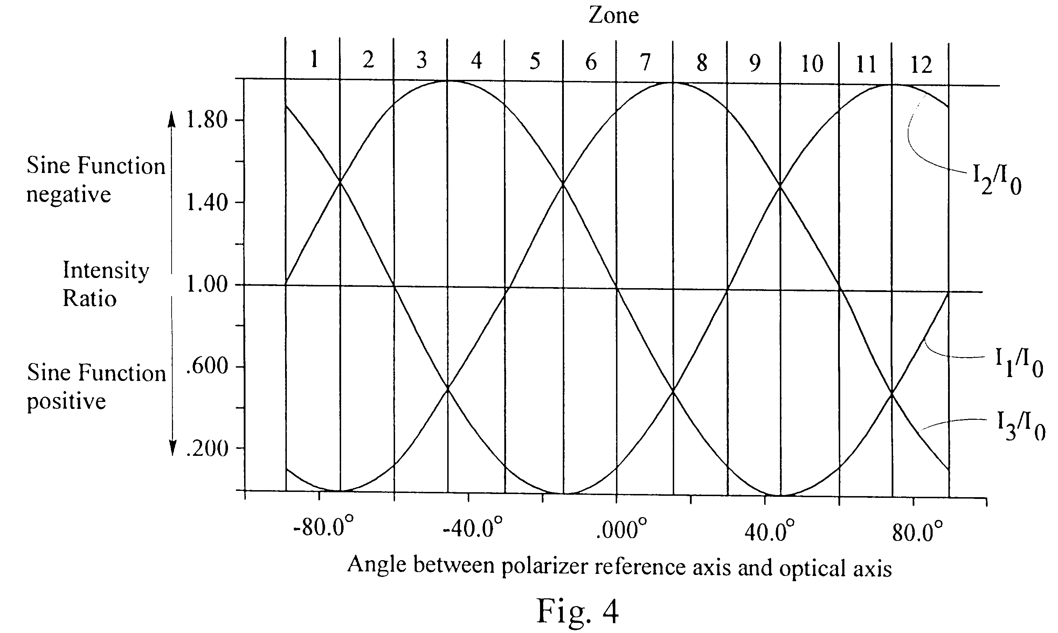

for the polarizer set at +60° (ie -120°) to the polarizer reference. These equations are graphed in Figure 4 using an arbitrary value of $\phi$ **= 90°**. By inspection it can be seen that the region - **90°** to **+ 90°** is segregated into twelve unique regions which may be described in terms of which polarizer provides for the largest depth of modulation, which the middle, and the sign of the function given by the sine of two times the angle $\alpha$.

Now if we form

$$R_1 = (I_1 / I_0) - 1,$$

$$R_2 = (I_2 / I_0) - 1,$$

and

$$R_3 = (I_3 / I_0) - 1,$$

and consider the results of forming **$R_1/R_2$, $R_2/R_1$, $R_2/R_3$, $R_3/R_2$, $R_1/R_3$**, and **$R_3/R_1$**, and expanding to generate expressions for $\alpha$, then
from **$R_1/R_2$** we have

$$\alpha = \tfrac{1}{2}\tan^{-1}\{(\sqrt{3}.\, R_1/R_2) / (2 + R_1/R_2)\}$$

from **$R_2/R_1$**

$$\alpha = \tfrac{1}{2}\tan^{-1}\{\sqrt{3} / (1 + 2.R_2/R_1)\}$$

from $R_2/R_3$

$$\alpha = \tfrac{1}{2}\tan^{-1}\{(\sqrt{3}.(1 + R_2/R_3) / (1 - R_2/R_3)\}$$

from $R_3/R_2$

$$\alpha = \tfrac{1}{2}\tan^{-1}\{(\sqrt{3}.(1 + R_3/R_2) / (R_3/R_2 - 1)\}$$

from $R_1/R_3$

$$\alpha = \tfrac{1}{2}\tan^{-1}\{(-\sqrt{3}.R_1/R_3) / (2 + R_1/R_3)\}$$

and from $R_3/R_1$

$$\alpha = \tfrac{1}{2}\tan^{-1}\{-\sqrt{3} / (1 + 2.R_3/R_1)\}$$

However all these values of $\alpha$ are only defined in the region -45° to +45° ±n.90°. But now consider that the choice of $I_1$ being aligned at 0° to the reference was arbitrary, and also consider the sequence by which the functions $I_1/I_0$, $I_2/I_0$, and $I_3/I_0$ provide for one function to have the greatest depth of modulation and the second to have the middle (ie. not the greatest and not the least) depth of modulation for all angles -90° to +90° relative to the perpendicular reference. Further consider the sign of the **sin2$\alpha$, sin2($\alpha$+60) and sin2($\alpha$-60)** portions of the expressions. The sign of these functions, **S**, has already been determined as part of the magnitude of the retardation computations, as that determining whether the modulation is inphase or 180° out of phase with the fitting function, ie if sine(2 times the angle) is > or < 0. Thus the angular range -90° to +90° may be subdivided into twelve 15° zones for which the greatest, medium and sign values occur as shown in Table 1. Thus knowledge of these three pieces of data provide for unique placement of $\alpha$ into a 15° segment in the range -90° to +90°.

Table 1

| Zone | Angle Range | Greatest depth of modulation provided by | Medium depth of modulation provided by | Sign of the sine two time angle function | Angular correction |
|---|---|---|---|---|---|
| 1 | -90° to -75° | $I_3$ | $I_2$ | +ve | -90° |
| 2 | -75° to -60° | $I_3$ | $I_1$ | +ve | -90° |
| 3 | -60° to -45° | $I_1$ | $I_3$ | -ve | -90° |
| 4 | -45° to -30° | $I_1$ | $I_2$ | -ve | 0° |
| 5 | -30° to -15° | $I_2$ | $I_1$ | +ve | 0° |
| 6 | -15° to 0° | $I_2$ | $I_3$ | +ve | 0° |
| 7 | 0° to 15° | $I_3$ | $I_2$ | -ve | 0° |
| 8 | 15° to 30° | $I_3$ | $I_1$ | -ve | 0° |
| 9 | 30° to 45° | $I_1$ | $I_3$ | +ve | 0° |
| 10 | 45° to 60° | $I_1$ | $I_2$ | +ve | 90° |
| 11 | 60° to 75° | $I_2$ | $I_1$ | -ve | 90° |
| 12 | 75° to 90° | $I_2$ | $I_3$ | -ve | 90° |

Now $\alpha$ is fully defined by the previously developed expressions of **$R_1/R_2$, $R_2/R_1$, $R_2/R_3$, $R_3/R_2$, $R_1/R_3$**, and

$R_3/R_1$, thus $\alpha$ may now be mapped directly into the respective 15° zone using the angle corrections given in Table 1.

Alternatively, different combinations of $I_1$, $I_2$ and $I_3$ and angular zones may be used, so as to both shift the reference angle and subsequently correct for it, thereby avoiding regions of the tangent function tending towards plus or minus infinity.

The depth of modulation, required to rank the responses, may be determined, among other methods, by consideration of the spectral signals from each polarizer at one wavelength or by summation of the normalized spectral energies received by each polarizer after corrections have been made for channel attenuation variations, polarizer inefficiencies and similar variations. The angular computations may be performed in a number of ways, including using one wavelength responses, or using all wavelength responses and averaging the results to reduce noise variations, or by using the responses for those wavelengths at or near the peak of the modulated signal, or most wavelength responses but avoiding those where the responses tend to zero and are thus most prone to noise contamination.

Thus $\alpha$ the angular orientation of the principal optical axes on the surface of the birefringent coating, relative to the chosen reference, is thus measured, without ambiguity, in the -90° to +90° range, and through symmetry the optical axes are fully defined. This approach is also valid, but the trigonometrical expressions more cumbersome, for the cases where the separation angles are not equal and for cases using more than three observer channels.

The optical analysis methods above provide for the measure of **R**, the birefringence induced retardation, and $\alpha$, the orientation of the principal optical axis on the surface of the birefringent material. Where, for the case of a birefringent coated shaft, $\alpha$ is measured in the plane tangential to the surface around an axis of rotation which passes through the centre of the shaft and uses as a reference direction the perpendicular to the longitudinal rotation axis of the shaft, and increases positively in a counter clockwise direction when viewed in a direction looking at the shaft. However for the following mechanical load analysis, the reference axis will be the shaft axis, and the direction of the principal optical axis will be $\theta$ where $\theta = \alpha + 90°$.

Consider the case where an epoxy coating forms a symmetrical cylinder around a symmetrical shaft subject to loading, and where the epoxy exhibits birefringence and where it is firmly bonded to the shaft such that the strains and torsional deformation angles at the interface are the same for both the shaft and the coating.

For the condition where $\theta$ is or can be assumed to be at **+ or - 45°**, the load acting on the shaft will be only torsion. From the Stress Optic Law (from Maxwell), we have:

$$R = 2.t.C.(\sigma_1 - \sigma_2)$$

also

$$(\sigma_1 - \sigma_1) = 2.\tau_{max}$$

thus

$$R = 4.t.c.\tau_{max}$$

where

| | |
|---|---|
| **t =** | thickness of the epoxy coating |
| $\sigma_1$ **-** $\sigma_2$ **=** | difference in principal stresses |
| **C =** | stress optic coefficient for the epoxy birefringent coating material |
| $\tau_{max}$ **=** | maximum in plane shear stress |

and we have

$$\tau_{max} = T_e.r^* / J_e$$

where

| | |
|---|---|
| $T_e$ **=** | torque load carried by the epoxy coating |
| **r\* =** | mean radius of the epoxy coating |
| $J_e$ **=** | polar moment of inertia of the epoxy coating. |

thus

$$T_e = s_r.J_e.R / 4.t.C.r^*$$

where

$s_r$ **= +1 for θ = +45°**
**= -1 for θ = -45°**

Further since the strains and thus the torsional deformation angle at the epoxy coating/shaft interface are the same,

$$T_s.l / J_s.G_s = T_e.l / J_e.G_e$$

where

$T_s$ **=** torque load carried by shaft in the coated region,
$J_s$ **=** polar moment of inertia of the shaft,
$G_s$ **=** shear modulus of the shaft,
$G_e$ **=** shear modulus of the epoxy coating,
**l =** length of shaft over which epoxy coating is placed, ie length of coated region.

and where

**T =** total torsion load carried by the combined coated shaft and coating, ie the torque load carried by the shaft outside of the coated region.

thus

**T = $T_s$ + $T_e$**
**= $T_e$.(1 + ($J_s.G_s$) / ($J_e.G_e$))**

For the condition where θ is or can be assumed to be at 0° or 180°, (the case for uniaxial compression), or +90° or -90°, (the case for uniaxial tension) the load acting on the shaft will be axial only. Again from the stress optic law we have:

$$R = 2.t.C.(\sigma_1 - \sigma_2)$$

however for axial loading $\sigma_2$ **= 0**, and $\sigma_1$ **= $\sigma_x$**, the tensile stress on the outer surface of the epoxy sensor, thus

$$R = 2.t.C.\sigma_x$$

or

$$= 2.t.C.P_e / A_e$$

since

$$\sigma_x = P_e / A_e$$

where

$P_e$ = axial load acting on the epoxy sensor,
$A_e$ = total cross sectional area of the epoxy coating.

hence

$$P_e = s_p.R.A_e / 2.t.C$$

where

$s_p$    = -1 for $\theta$ = 0° or 180° (compression)
      = +1 for $\theta$ = +90° or -90° (tension).

Further, since the strains at the epoxy coating/shaft interface are the same,

$$P_s.l / A_s.E_s = P_e.l / A_e.E_e$$

where

$P_s$ = axial force acting on the shaft in the coated region,
$A_s$ = cross sectional area of the shaft,
$E_s$ = modulus of elasticity of the shaft,
$E_e$ = modulus of elasticity of the epoxy coating

and where

$P$ = total axial load carried by the combined coated shaft and coating, ie the axial load carried by the shaft outside of the coated region.

then

$P$   $= P_s + P_e$
      $= P_e.(1 + (A_s.E_s) / (A_e.E_e))$

For the more general case where $\theta \neq$ **0°, ±45°, ±90° or 180°**, a combined torsion and axial load condition exists, and it is knowledge of the stress conditions at the surface of the shaft that are required so that these loads may be determined. From Mohr's equations we know that on the outer surface of the epoxy coating

$\tan(2.\theta)$   $= 2.\tau_{xy} / \sigma_x$
          $= 2.r_o.A_e.T_e / J_e.P_e$

or

$$T_e = J_e.P_e.\tan(2.\theta) / 2.r_o.A_e$$

also we know that $\tau_{max}$ at radius $r = r_n$ is

$$\tau_{max}(r_n) = \{(P_e / 2.A_e)^2 + (T_e.r_n / J_e)^2\}^{\frac{1}{2}}$$

now

$R$   $= 2.t.C.(\sigma_1 - \sigma_2)$
      $= 4.t\ C.\tau_{max}$

and for a thin shell of the coating $\Delta$**t** thick of radius $r_n$, the retardation contribution $\Delta$**R** to the total **R** is

$$\Delta R = 4.C.\Delta t.\tau_{max}(r_n)$$

and where

$r_i =$     inside radius of the epoxy coating,
$r_o =$     outside radius of the epoxy coating,
$n =$     $(r_o - r_i) / \Delta t$

thus

$$r_n = r_i + (n + \tfrac{1}{2}).\Delta t$$

then

$R$  $= \Sigma^n_{j=0}\{4.C.\Delta t.\tau_{max}(r_n)\}$
   $= 4.C.\Sigma^n_{j=0}[\Delta t\{(P_e / 2.A_e)^2 + (T_e.(r_i + (j + \tfrac{1}{2}).\Delta t) / J_e)^2\}^{\frac{1}{2}}]$

and substituting for **T**

$$R = 4.C.\Sigma^n_{j=0}[\Delta t\{(P_e / 2.A_e)^2 + (P_e.\tan(2.\theta).(r_i + (j + \tfrac{1}{2}).\Delta t) / 2.r_o.A_e)^2\}^{\frac{1}{2}}]$$

which may be solved for $P_e$ using various approaches, including iterative approximation.
Then, having the value of $P_e$ that satisfies the above equation, the corresponding value of $T_e$ is obtained,

$$T_e = (P_e.J_e.\tan(2.\theta)) / 2.r_o.A_e$$

which provides the required separation of the measured **R** and $\theta$ data into the contributing torque and axial loads carried by the epoxy coating. Load sharing exists between the coated shaft and the coating, thus the total loads carried by the shaft are provided for the axial loads by

$$P = P_e.(1 + (A_s.E_s) / (A_e.E_e))$$

and for the torque loads by

$$T = T_e.(1 + (J_s.G_s) / (J_e.G_e)).$$

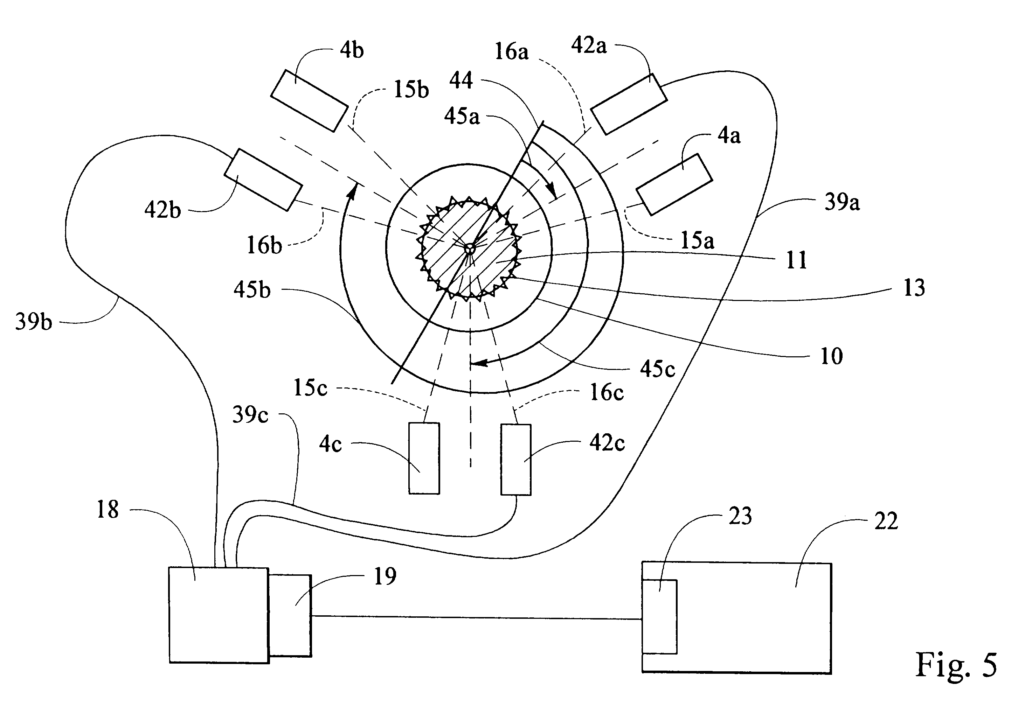

An expansion of this preferred embodiment of the measurement system can be used for the condition where the shaft is subject to bending, either as the only load acting on the shaft or where bending loads exist in addition to torque and/or axial loads. Referring to Figure 5, three illumination heads 4a, 4b and 4c, and three observer heads 42a, 42b, and 42c, are located around the periphery of the shaft 11. The angular positions 45a, 45b and 45c, of the observer heads with respect to a convenient reference 44, eg. the vertical line through the centre of the shaft, are determined as part of the installation and set up of the apparatus, and each illumination head illuminates a region of the shaft with circular polarized light 15a, 15b and 15c. Some of the light 16a, 16b and 16c that has passed through the birefringent coating 10, which is attached to the shaft 11, with adhesive 13, is collected by observers 42a, 42b and 42c, where each of the illuminating heads and observer heads are constructed in the manner described for the preferred embodiment described above and illustrated in Figure 1. For each observer head, the combined light from each of the three polarizers is taken by fibre optic bundles 39a, 39b and 39c, to the holographic spectrometer 18. The nine i.e. 3 times 3 optical fibres are arranged to form the input slit for the spectrometer such that light from each fibre is maintained separate, spectrally separated and with the output occupying a separate region of the two dimensional detector of the solid state camera 19. The intensity values for the pixels is read and digitized under the control of software running in computer 22, and using the digitizing interface card 23, attached to the computer. Three sets of three intensity arrays are formed in the computer from which, for each observed position on the shaft, the optical retardation value and optical axes directions on the surface of the birefringent coating are determined, as discussed above. From these, again as discussed above, the Torque and Axial loadings which when acting on the shaft would give rise to the measured optical retardation and axes directions are calculated for each observed position around the shaft. Now the axial loads at each location comprise the combination of the axial load acting on the shaft in its entirety and the bending load superimposed either additively or subtractively. Bending is considered as the displacement of the centre line of the shaft at a location along its length with respect to the projection of the centre line of the shaft at a second location, and is such that the axial loading induced by the bending displacement may vary with distance from either location (due to the manner in which the bending is being caused and the restraints applied to the shaft). For any given location along the shaft, there is one plane as shown in Figure 6a, which passes through the shaft and contains both the maximum and minimum axial loads, ie. the delta tensile and delta compressive load variations to the Axial load acting on the shaft in its entirety, these delta variations being occasioned by the bending as shown in Figure 6b. Thus if the Axial loads, as determined by the observers for each of the predetermined angular positions 45a, 45b and 45c, around the shaft, are formed into the array **A(i)**, where **i = 1, ....., number of observers employed**, and where β**(i)** is the array of angular positions 45a, 45b and 45c, of the observers with respect to shaft reference, eg the vertical. These may then be fitted to an equation constrained to the form:

$$A(i) = A + B.Sin(\beta(i) - BP)$$

where

**A =** Axial load acting on the entirety of the shaft,
**B =** Maximum bending load superimposed additively or subtractively on the axial load,
**BP =** Bending plane angular offset from the reference plane eg. the vertical.

Variations and modifications are possible, such as the use of prisms as the spectral separation means, linear detector arrays rather than two dimensional arrays, incorporation of the spectral separation means with the observer optics thereby removing the requirement for fibre optic elements, the use of the holographic spectral separation means to spectrally separate in parallel the light from all the polarizers in all the observer heads when bending loads are being measured, or from several observer heads when loads in multiple shafts or at multiple shaft locations are being measured, the use for measuring loads, strains and stresses in mechanical elements forming part of structures, mechanical systems and load carrying systems of any form, the use with non-symmetrical shafts.

**Claims**

1. A method for measuring stress conditions that exist at a surface of a mechanical element comprising the steps of:

    (a) coating the mechanical element with a birefringent material such that strain conditions that exist at the surface of the mechanical element are caused also to exist on an inner surface of the birefringent material adjacent to the mechanical element, and creating an interface between the birefringent material and the mechanical element which provides for the reflection of light that has passed through the birefringent material and where this reflective interface may be either the surface of the mechanical element or a material placed there to provide this reflection;
    (b) illuminating the birefringent material coating the mechanical element with circular or elliptically polarized light having a broad spectrum;
    (c) collecting, using an observer system comprising of optical elements, some of the light that has passed through the birefringent material and that has been reflected back through the birefringent material by the reflective interface, and passing this light through a polarizing means;
    (d) spectrally separating some of that light that has passed through the polarizing means, and determining the energy distribution across a separated spectrum as a function of either wavelength, frequency or physical positions on an energy measuring means;
    (e) demodulating this energy distribution function;
    (f) determining the magnitude of the birefringence in the birefringent material coating the mechanical element by consideration of the frequency or pattern of the demodulated energy distribution function;
    (g) determining stress conditions existing at the surface of the mechanical element in its condition of being coated with the birefringent material and stress conditions that would exist in the mechanical element under the same conditions but in the absence of the birefringent material by utilizing data related to the optical sensitivity of the birefringent material, the thickness of the birefringent coating the dimensions of the element, the material properties of the element, and the magnitude of the birefringence in the birefringent material coating the mechanical element.

2.  The method as defined in claim 1, wherein the stress conditions determined in step (g) are used, in conjunction with the dimensions of the element and its material properties, to compute load conditions which, when acting on the element, produce the determined stress conditions.

3.  The method as defined in claim 1, wherein the determined stress conditions are used to calculate that proportion of yield load that the element is subject to, to calculate that proportion of safe working load that the mechanical element is subject to, and to calculate the total load acting on the mechanical element.

4.  The method as defined in claim 1, wherein strain conditions that exist on a surface of a mechanical element are calculated.

5.  The method as defined in claim 2, wherein the mechanical element is a shaft, and wherein a priori knowledge provides that the only load acting on the shaft is torque or that the actual loads acting on the shaft may be considered as if they are only torque loads, or that from among the plurality of loads acting on the shaft only the torque load is to be measured and wherein step (g) these torque loads are calculated.

6.  The method as defined in claim 2, wherein the mechanical element is a shaft, and wherein a priori knowledge provides that the only load acting on the shaft is axial or that the actual loads acting on the shaft may be considered as if they are only axial loads, or that from among the plurality of loads acting on the shaft only the axial load is to be measured and wherein step (g) these axial loads are calculated.

7.  The method as defined in claim 1, wherein in step (c) the collected light is passed through a plurality of linear or elliptical polarisers in parallel, each with its axis of polarization set at different and known angular orientations to each other and at known orientations to a reference direction of the observer means and to a reference axis for the mechanical element; and in step (d) the light from each of these polarisers is spectrally separated and the spectral energy distributions for each determined; and in step (g) using the angle differences between the polarizer axes and the reference axis of the mechanical element, the directions of the stresses in the mechanical element are additionally calculated from the plurality of spectral responses.

8.  The method as defined in claim 7, wherein the element is a shaft, and wherein in step (g) the total load acting on the shaft is calculated and from which using the angular information either torque loads or axial loads or both torque and axial loads are calculated.

9.  The method as defined in claim 8, wherein the shaft is rotating.

10. The method as defined in claim 8, wherein the shaft is stationary.

11. The methods as defined in claim 2 and claim 8, wherein the loads are static.

12. The methods as defined in claim 2 and claim 8, wherein the loads vary with time.

13. The method as defined in claim 9, wherein the loads vary with rotation angle of the shaft.

14. The method as defined in claim 8, wherein the birefringent material applied to the shaft is illuminated and reflected light is collected and analysed from a plurality of locations around the circumference of the shaft, each at a known angular separation to the other locations, and wherein the determined relative retardations and optical axes directions at each location are used to determine the torque and axial loads at each location from which torque, axial load and bending loads acting on the shaft and shaft bending axis are determined.

15. The method claimed in any one of the preceding claims, wherein the calculated torque load acting on the shaft is used in conjunction with shaft rotation speed to compute the power being transferred by the shaft.

16. A method claimed in any one of the preceding claims, wherein in addition to the stress conditions at the surface of the mechanical element or shaft, the stress conditions through the thickness of the mechanical element or shaft are also computed.

**17.** An apparatus for measuring stress conditions that exist at a surface of a mechanical element comprising:

(a) a birefringent coating (10) applied to the mechanical element (11) such that strain conditions that exist at the surface of the mechanical element are caused also to exist on the surface of the birefringent material adjacent to the mechanical element, and with an interface (13) between the birefringent material and the mechanical element which provides for the reflection of light that has passed through the birefringent material and where this reflective interface may be either the surface of the mechanical element or a material placed there to provide this reflection;

(b) a source (4) of circular or elliptically polarized light having a broad spectrum together with associated optical elements to direct this polarized light onto the birefringent material coating the mechanical element;

(c) an observer means (42) comprising of optical elements for collecting some of the light that has passed through the birefringent material and that has been reflected back through the birefringent material by the reflective interface, and passing this light through a polarizing means;

(d) a spectral separation means (18) disposed to receive as input the light that has passed through the polarizing means, and with the output from the spectral separation means being spectrally separated light, and with the spectral separation means disposed to relay this output spectrally separated light onto an energy measuring means (19) comprising a plurality of detectors or elements and arranged such that each detector or element receives light energy from a different part of the separated spectra;

(e) an electronic interface means (23) for measuring the energy received by each detector or element of the energy detector (19), and for forming a representation of the spectrally separated light energy levels and storing this representation of the continuous spectral energy distribution in a storage means;

(f) a computational means (22) for accessing the storage means, and in accordance with stored routines that have been encoded in a manner suitable for controlling the computational means, demodulating the representation of the continuous spectral energy distribution, and determining the magnitude of the birefringence in the birefringent material coating the mechanical element by consideration of the frequency or pattern of the demodulated energy distribution function;

(g) further stored routines, that have been encoded in a manner suitable for controlling the computational means, for determining stress conditions existing at the surface of the mechanical element in its condition of being coated with the birefringent material and stress conditions that would exist in the mechanical element under the same conditions but in the absence of the birefringent material by utilizing data related to the optical sensitivity of the birefringent material, the thickness of the birefringent coating, the dimensions of the element, the material properties of the element, and the magnitude of the birefringence in the birefringent material coating the mechanical element.

**18.** The apparatus as described in claim 17, wherein in (g) the computational means is additionally programmed to compute the percentage of the safe working load and the proportion of yield load that the mechanical element is subject to.

**19.** The apparatus as described in claim 17, wherein the mechanical element comprises part of a shaft and wherein in (g) the computational means is programmed to compute the torque or axial loads or combination of torque and axial loads acting on the shaft using operator or previously stored inputs in the decision process as to which load or loads exist or are deemed to exist in the shaft or are required to be measured.

**20.** The apparatus as described in claim 17, wherein in (c) the light is passed through a plurality of linear or elliptical polarisers in parallel, each with its axis of polarization set at different and known angular orientations to each other and at known orientations to a reference direction of the observer means and the angular orientations of the polarisers axes are known or are determined using an angular measurement means for determining angle differences between the angular orientations of the polarizer axes and a reference axis for the mechanical element; and in (d) the spectral separation means for spectrally separating the light, is disposed to receive the light from the plurality of polarisers as inputs, and for spectrally separating each input in parallel and for relaying outputs onto an energy measuring means; and in (g) the directions of the stresses in the mechanical element are additionally calculated from the spectral responses and using the angle differences between the polarizer axes and the reference axis of the mechanical element.

**21.** The apparatus as described in claim 20, wherein in (d) a plurality of spectral separation means and energy measuring means are used.

**22.** The apparatus as described in claim 20, wherein in (g) the computational means computes the loads acting on the mechanical element.

**23.** The apparatus as described in claim 22, wherein in the mechanical element comprises part of a shaft and wherein in (g) the computational means is additionally programmed to compute the torque and axial loads acting on the shaft.

**24.** The apparatus as described in claim 23, wherein in (b) the illumination is provided by a plurality of illumination means each directed at different angular orientations around the circumference of the shaft which is coated with the birefringent material in accordance with (a), and wherein in (c) light is received by a plurality of observer means, each receiving light from a known angular orientation around the circumference of the shaft, and wherein in (d) the light from each of the polarisers in each of the observer means is spectrally separated, and wherein in (g) the computational means is programmed to calculate in addition to the torque and axial loads, the bending load that the shaft is subject to, and axis along which this bending is occurring.

**Patentansprüche**

**1.** Verfahren zum Messen von Spannungsbedingungen, die auf einer Oberfläche eines mechanischen Elementes bestehen, mit folgenden Schritten:

(a) Beschichten des mechanischen Elementes mit einem doppelbrechenden Material derart, dass die Belastungsbedingungen, die auf der Oberfläche des mechanischen Elementes existieren, auch zum Existieren auf einer inneren Oberfläche des doppelbrechenden Materials benachbart zum mechanischen Element gebracht werden, und Erzeugen einer Grenzfläche zwischen dem doppelbrechenden Material und dem mechanischen Element, welche für die Reflexion von Licht sorgt, das durch das doppelbrechende Material hindurchgetreten ist und wobei diese reflektierende Grenzfläche entweder die Oberfläche des mechanischen Elementes oder eines dort platzierten Materials ist, das die Reflexion erzeugt;
(b) Beleuchten des doppelbrechenden Materials, das das mechanische Element beschichtet, mit zirkular oder elliptisch polarisiertem Licht mit einem breiten Spektrum;
(c) Sammeln von Teilen des Lichts, das durch das doppelbrechende Material hindurchgetreten ist und das durch das doppelbrechende Material durch die reflektierende Grenzfläche zurückreflektiert worden ist, unter Verwendung eines Beobachtungssystems bestehend aus optischen Elementen und Hindurchleiten dieses Lichtes durch eine Polarisationseinrichtung;
(d) Spektrales Abtrennen von Teilen des Lichts, das durch die Polarisationseinrichtung hindurchgetreten ist, und Feststellen der Energieverteilung über ein separiertes Spektrum als Funktion von entweder Wellenlänge, Frequenz oder physischer Stellung auf einer Energiemesseinrichtung;
(e) Demodulieren der Energieverteilungsfunktion;
(f) Feststellen der Größe der Doppelbrechung in dem doppelbrechenden Material, das das mechanische Element beschichtet, unter Berücksichtigung der Frequenz oder der Form der demodulierten Energieverteilungsfunktion;
(g) Feststellen der Spannungsbedingungen, die auf der Oberfläche des mechanischen Elements in dem Zustand des Beschichtetseins mit dem doppelbrechenden Material existieren und der Spannungsbedingungen, die in dem mechanischen Element unter den gleichen Bedingungen, aber in Abwesenheit des doppelbrechenden Materials existieren würden durch Verwenden von Daten in Bezug auf die optische Empfindlichkeit des doppelbrechenden Materials, der Dicke der doppelbrechenden Beschichtung, die die Abmessungen des Elementes beschichtet, der Materialeigenschaften des Elementes und der Größe der Doppelbrechung in dem doppelbrechenden, das mechanische Element beschichtenden Material.

**2.** Verfahren wie in Anspruch 1 beansprucht, in welchem die in Schritt (g) festgestellten Spannungsbedingungen in Verbindung mit den Abmessungen des Elementes und seinen Materialeigenschaften verwendet werden, um die Belastungsbedingungen zu errechnen, welche, wenn sie auf das Element einwirken, die festgestellten Spannungsbedingungen erzeugen.

**3.** Verfahren wie in Anspruch 1 beansprucht, in welchem die festgestellten Spannungsbedingungen zum Berechnen des Anteils der Fließbelastung verwendet werden, der das Element ausgesetzt ist, um den Anteil der zulässigen Betriebsbeanspruchung zu berechnen, der das mechanische Element ausgesetzt ist, und um die Gesamtlast wirkend auf das mechanische Element zu berechnen.

4. Verfahren wie in Anspruch 1 beansprucht, in welchem die Spannungsbedingungen, die auf der Oberfläche eines mechanischen Elementes existieren, berechnet werden.

5. Verfahren wie in Anspruch 2 beansprucht, in welchem das mechanische Element eine Welle ist, und in welchem eine a priori Kenntnis vorhanden ist, dass die einzige auf die Welle wirkende Belastung eine Torsion ist oder dass die aktuelle auf die Welle wirkende Belastung berücksichtigt werden könnte als wenn lediglich Torsionsbelastungen existieren würden, oder dass aus einer Vielzahl von Belastungen, die auf die Welle wirken, lediglich die Torsionsbelastung gemessen werden muss und in welchem im Schritt (g) diese Torsionsbelastungen berechnet werden.

6. Verfahren wie in Anspruch 2 beansprucht, in welchem das mechanische Element eine Welle ist und in welchem eine a priori Kenntnis vorhanden ist, dass die einzige auf die Welle wirkende Belastung axial ist oder dass die tatsächlichen auf die Welle wirkenden Belastungen betrachtet werden könnten als ob sie lediglich axiale Belastungen wären, oder dass aus einer Vielzahl von auf die Welle wirkenden Belastungen lediglich eine axiale Belastung gemessen werden muss und in welchem im Schritt (g) diese axialen Belastungen berechnet werden.

7. Verfahren wie in Anspruch 1 beansprucht, in welchem im Schritt (c) das gesammelte Licht parallel durch eine Mehrzahl von linearen oder elliptischen Polarisatoren hindurchgeführt wird, jeder mit seiner Polarisationsachse in unterschiedlichen und bekannten Winkelorientierungen zueinander und in bekannten Orientierungen zu einer Bezugsrichtung der Beobachtungseinrichtung und zu einer Bezugsachse für das mechanische Element; und in welchem in Schritt (d) das Licht von jedem dieser Polarisatoren spektral separiert und die spektralen Energieverteilungen für jeden festgestellt wird; und in welchem in Schritt (g) die Winkelunterschiede zwischen den Polarisationsachsen und der Bezugsachse des mechanischen Elementes verwendet werden, wobei die Richtungen der Spannungen in dem mechanischen Element zusätzlich aus der Vielzahl von spektralen Reaktionen berechnet werden.

8. Verfahren wie in Anspruch 7 beansprucht, in welchem das Element eine Welle ist, und in welchem in Schritt (g) die gesamte auf die Welle wirkende Belastung berechnet wird und aus welcher unter Verwendung der Winkelinformationen entweder die Torsionsbelastungen oder die Axialbelastungen oder sowohl Torsions- als auch Axialbelastungen berechnet werden.

9. Verfahren wie in Anspruch 8 beansprucht, in welchem sich die Welle dreht.

10. Verfahren wie in Anspruch 8 beansprucht, in welchem die Welle stationär ist.

11. Verfahren wie in Anspruch 2 und in Anspruch 8 beansprucht, in welchem die Belastung statisch ist.

12. Verfahren wie in Anspruch 2 und in Anspruch 8 beansprucht, in welchem die Belastung mit der Zeit veränderlich ist.

13. Verfahren wie in Anspruch 9 beansprucht, in welchem die Belastungen sich mit dem Drehwinkel der Welle verändern.

14. Verfahren wie in Anspruch 8 beansprucht, in welchem das doppelbrechende der Welle aufgefügte Material beleuchtet ist und reflektiertes Licht aus mehreren in bekanntem Winkelabstand um den Umfang der Welle herum angeordneten Positionen gesammelt und analysiert wird, und in welchem die festgestellten relativen Verzögerungen und die optischen Achsrichtungen an jeder Position verwendet werden, um die Torsions- und Axialbelastungen an jeder Position festzustellen, aus welchen die Torsion, die Axialbelastungen und die Biegebelastungen, die auf die Welle und die Wellenbiegeachse wirken, festgestellt werden.

15. Verfahren wie in einem der vorstehenden Ansprüche beansprucht, in welchem die berechnete auf die Welle wirkende Torsionsbelastung in Verbindung mit der Wellendrehgeschwindigkeit verwendet wird, um die durch die Welle übertragene Leistung zu berechnen.

16. Verfahren wie in einem der vorstehenden Ansprüche beansprucht, in welchem zusätzlich zu den Spannungsbedingungen auf der.Oberfläche des mechanischen Elementes oder der Welle die Spannungsbedingungen durch die Dicke des mechanischen Elementes oder der Welle berechnet werden.

17. Vorrichtung zum Messen von Spannungsbedingungen, die auf einer Oberfläche eines mechanischen Elementes bestehen, enthaltend:

(a) Eine auf das mechanische Element (11) derart aufgefügte doppelbrechende Beschichtung (10), dass die Belastungsbedingungen, die auf der Oberfläche des mechanischen Elementes existieren, auch zum Existieren auf einer Oberfläche des doppelbrechenden Materials benachbart zum mechanischen Element gebracht werden, und mit einer Grenzfläche (13) zwischen dem doppelbrechenden Material und dem mechanischen Element, die für die Reflexion des durch das doppelbrechende Material hindurchgetretenen Lichtes sorgt, und wobei diese reflektierende Grenzfläche entweder die Oberfläche des mechanischen Elementes oder eines dort platzierten Materials ist, das die Reflexion erzeugt;

(b) Eine Quelle (4) von zirkular oder elliptisch polarisiertem Licht mit einem breiten Spektrum zusammen mit zugeordneten optischen Elementen, um das polarisierte Licht auf das doppelbrechende, das mechanische Element beschichtende Material zu richten;

(c) Eine Beobachtungseinrichtung (42) aufweisend optische Elemente zum Sammeln von Teilen des durch das doppelbrechende Material hindurchgetretenen Lichtes, das aufgrund der reflektierenden Grenzfläche durch das doppelbrechende Material zurückreflektiert wurde, und zum Hindurchleiten dieses Lichtes durch die Polarisationseinrichtung;

(d) Eine spektrale Abtrenneinrichtung (18), die als Eingabe das Licht erhält, welches durch die Polarisationseinrichtung hindurchgeleitet wurde, und deren Ausgabe spektral separiertes Licht ist, und die so angeordnet ist, dass dieses ausgabeseitige spektral separierte Licht auf eine Energiemesseinrichtung (19) übertragen wird, die mehrere Detektoren oder Elemente aufweist und derart angeordnet ist, dass jeder Detektor oder jedes Element Lichtenergie aus einem anderen Teil des separierten Spektrums empfängt;

(e) Eine elektronische Zwischeneinrichtung (23) zum Messen der von jedem Detektor oder Element des Energiedetektors (19) empfangenen Energie, und zum Bilden einer Repräsentation der spektral separierten Lichtenergieniveaus und zum Speichern dieser Repräsentation der kontinuierlichen spektralen Energieverteilung in einer Speichereinrichtung;

(f) Eine Berechnungseinrichtung (22) zum Zugriff auf die Speichereinrichtung, und in Übereinstimmung mit gespeicherten Routinen, die in einer geeigneten Form zur Steuerung der Berechnungseinrichtung kodiert wurden, demodulierend die Repräsentation der kontinuierlichen spektralen Energieverteilung, und feststellend die Größe der Doppelbrechung in dem doppelbrechenden, das mechanische Element beschichtenden Material unter Berücksichtigung der Frequenz oder des Musters der demodulierten Energieverteilungsfunktion;

(g) Außerdem gespeicherte Routinen, die in einer geeigneten Weise zur Steuerung der Berechnungseinrichtung kodiert wurden zum Bestimmen der Spannungsbedingungen, die auf der Oberfläche des mechanischen Elementes in seinem mit dem doppelbrechenden Material beschichteten Zustand existieren, und der Belastungsbedingungen, die in dem mechanischen Element unter den gleichen Bedingungen, aber in Abwesenheit des doppelbrechenden Materials existieren würden, unter Verwendung von Daten in Bezug auf die optische Empfindlichkeit des doppelbrechenden Materials, der Dicke der doppelbrechenden Beschichtung, der Abmessungen des Elementes, der Materialeigenschaften des Elementes, und der Größe der Doppelbrechung in dem doppelbrechenden, das mechanische Element beschichtenden Material.

18. Vorrichtung wie in Anspruch 17 beansprucht, in welchem in (g) die Berechnungseinrichtung zusätzlich programmiert ist, den Prozentsatz der zulässigen Betriebsbelastung und den Anteil der Fließlast, der das mechanische Element ausgesetzt ist, zu berechnen.

19. Vorrichtung wie in Anspruch 17 beansprucht, in welchem das mechanische Element einen Teil einer Welle aufweist und in welchem in (g) die Berechnungseinrichtung programmiert ist, die Torsion oder die Axialbelastungen oder eine Kombination aus Torsion und auf die Welle wirkender Axialbelastungen zu berechnen, unter Verwendung eines Operators oder zuvor gespeicherter Eingaben in einen Entscheidungsprozess betreffend welcher Belastung oder Belastungen in der Welle existieren oder vermutlich existieren oder gemessen werden müssten.

20. Vorrichtung wie in Anspruch 17 beschrieben, in welchem in (c) das Licht durch mehrere lineare oder elliptische Polarisatoren parallel hindurchgeführt wird, jeder mit einer Polarisationsachse, die in unterschiedlichen und bekannten Winkelorientierungen zueinander und in bekannten Orientierungen zu einer Bezugsrichtung einer Beobachtungseinrichtung angeordnet ist, und wobei die Winkelorientierungen der Polarisationsachsen bekannt sind oder unter Verwendung einer Winkelmesseinrichtung zum Feststellen von Winkelunterschieden zwischen den Winkelorientierungen der Polarisationsachsen und einer Bezugsachse für das mechanische Element festgestellt werden; und in (d) die spektrale Abtrenneinrichtung zum spektralen Separieren des Lichtes zum Empfang von Licht von mehreren Polarisatoren als Eingabe angeordnet ist und zum spektralen Trennen eines jeden Eingangs in parallel und zum Übertragen der Ausgaben auf eine Energiemesseinrichtung; und in (g) die Richtung der Belastungen in dem mechanischen Element zusätzlich aus den spektralen Reaktionen unter Verwendung der Winkelunterschiede zwischen den Polarisationsachsen und der Bezugsachse des mechanischen Elementes berechnet werden.

**21.** Vorrichtung wie in Anspruch 20 beansprucht, in welchem in (d) mehrere spektrale Abtrenneinrichtungen und Energiemesseinrichtungen verwendet werden.

**22.** Vorrichtung wie in Anspruch 20 beansprucht, in welchem in (g) die Berechnungseinrichtung die Belastungen berechnet, die auf das mechanische Element wirken.

**23.** Vorrichtung wie in Anspruch 22 beansprucht, in welchem in dem mechanischen Element ein Teil einer Welle enthalten ist und in welchem in (g) die Berechnungseinrichtung zusätzlich programmiert ist, die Torsion und Axialbelastungen zu berechnen, die auf die Welle wirken.

**24.** Vorrichtung wie in Anspruch 23 beansprucht, in welchem in (b) die Beleuchtung durch mehrere Beleuchtungseinrichtungen erfolgt, welche jede in unterschiedlichen Winkelorientierungen um den Umfang der Welle ausgerichtet sind, welche mit dem doppelbrechenden Material in Übereinstimmung mit (a) beschichtet ist, und in welchem in (c) das Licht von mehreren Beobachtungseinrichtungen empfangen wird, von denen jede Licht aus einer bekannten Winkelorientierung um den Umfang der Welle empfängt, und in welchem in (d) das Licht von jedem der Polarisatoren jeder der Beobachtungseinrichtungen spektral getrennt wird und in welchem in (g) die Berechnungseinrichtung programmiert ist, zusätzlich die Torsion und die Axialbelastungen zu berechnen, die Biegebelastung, der die Welle ausgesetzt ist, und die Achse längs welcher das Biegen auftritt.

## Revendications

**1.** Procédé de mesure d'états de contrainte présents sur une surface d'un élément mécanique comprenant les étapes de:

(a) revêtement de l'élément mécanique avec un matériau biréfringent de telle sorte que les états de contrainte présents sur la surface de l'élément mécanique soient aussi amenés à être présents sur une surface interne du matériau biréfringent adjacent à l'élément mécanique, et création d'une interface entre le matériau biréfringent et l'élément mécanique qui assure la réflexion de la lumière qui est passée à travers le matériau biréfringent et dans lequel cette interface réfléchissante peut être soit la surface de l'élément mécanique soit un matériau placé sur celle-ci de manière à assurer cette réflexion ;
(b) éclairement du matériau biréfringent revêtant l'élément mécanique avec une lumière polarisée de manière circulaire ou elliptique présentant un spectre étendu ;
(c) collecte, en utilisant un système d'observation comprenant des éléments optiques, d'une partie de la lumière qui est passée à travers le matériau biréfringent et qui a été renvoyée par réflexion à travers le matériau biréfringent par la surface réfléchissante, et transmission de cette lumière à travers un moyen polarisant ;
(d) séparation spectrale d'une partie de cette lumière qui est passée à travers le moyen polarisant, et détermination de la répartition d'énergie sur un spectre séparé en fonction soit de la longueur d'onde, soit de la fréquence, soit des positions physiques sur un moyen de mesure d'énergie ;
(e) démodulation de cette fonction de répartition d'énergie ;
(f) détermination du niveau de la biréfringence dans le matériau biréfringent revêtant l'élément mécanique en considérant la fréquence ou le profil de la fonction de répartition d'énergie démodulée ;
(g) détermination des états de contrainte présents sur la surface de l'élément mécanique dans son état revêtu par le matériau biréfringent et des états de contrainte qui pourraient être présents dans l'élément mécanique sous les mêmes conditions, mais en l'absence du matériau biréfringent, en utilisant des données se rapportant à la sensibilité optique du matériau biréfringent, à l'épaisseur du revêtement biréfringent, aux dimensions de l'élément, aux propriétés du matériau de l'élément et au niveau de la biréfringence dans le matériau biréfringent revêtant l'élément mécanique.

**2.** Procédé selon la revendication 1, dans lequel les états de contrainte déterminés à l'étape (g) sont utilisés en relation avec les dimensions de l'élément et ses propriétés de matériau, afin de calculer les états de charge qui, lorsqu'ils agissent sur l'élément, produisent les états de contrainte déterminés.

3. Procédé selon la revendication 1, dans lequel les états de contrainte déterminés sont utilisés afin de calculer la proportion de la charge limite élastique à laquelle l'élément est soumis afin de calculer la proportion de la charge de service de sécurité à laquelle l'élément mécanique est soumis, et de calculer la charge totale agissant sur l'élément mécanique.

4. Procédé selon la revendication 1, dans lequel les états de contrainte présents sur une surface d'un élément mécanique sont calculés.

5. Procédé selon la revendication 2, dans lequel l'élément mécanique est un arbre, et dans lequel une connaissance a priori assure que la seule charge agissant sur l'arbre est un couple, ou que les charges réelles agissant sur l'arbre peuvent être considérées comme étant seulement des charges de couple, ou que, parmi la pluralité de charges agissant sur l'arbre, seule la charge de couple doit être mesurée et dans lequel, à l'étape (g), ces charges de couple sont calculées.

6. Procédé selon la revendication 2, dans lequel l'élément mécanique est un arbre, et dans lequel une connaissance a priori assure que la charge seule agissant sur l'arbre est axiale ou que les charges réelles agissant sur l'arbre peuvent être considérées comme étant seulement des charges axiales, ou que, parmi la pluralité de charges agissant sur l'arbre, seule la charge axiale doit être mesurée et dans lequel, à l'étape (g), ces charges axiales sont calculées.

7. Procédé selon la revendication 1, dans lequel, à l'étape (c), la lumière collectée est transmise à travers une pluralité d'éléments polarisants linéaires ou elliptiques en parallèle, l'axe de polarisation de chacun étant placé suivant des orientations angulaires différentes l'une par rapport à l'autre et connues et suivant des orientations connues par rapport à une direction de référence du moyen d'observation et par rapport à un axe de référence de l'élément mécanique ; et, à l'étape (d), la lumière provenant de chacun de ces éléments polarisants est séparée spectralement et les répartitions d'énergie spectrale sont déterminées pour chacun; et, à l'étape (g), en utilisant les différences angulaires entre les axes d'éléments polarisants et l'axe de référence de l'élément mécanique, les directions des contraintes dans l'élément mécanique sont, en outre, calculées à partir de la pluralité de réponses spectrales.

8. Procédé selon la revendication 7, dans lequel l'élément est un arbre, et dans lequel, à l'étape (g), la charge totale agissant sur l'arbre est calculée et, à partir de celle-ci, en utilisant les informations angulaires, soit les charges de couple, soit les charges axiales, soit à la fois les charges de couple et axiales sont calculées.

9. Procédé selon la revendication 8, dans lequel l'arbre tourne.

10. Procédé selon la revendication 8, dans lequel l'arbre est fixe.

11. Procédés selon la revendication 2 et la revendication 8, dans lesquels les charges sont statiques.

12. Procédés selon la revendication 2 et la revendication 8, dans lesquels les charges varient en fonction du temps.

13. Procédé selon la revendication 9, dans lequel les charges varient avec l'angle de rotation de l'arbre.

14. Procédé selon la revendication 8, dans lequel le matériau biréfringent appliqué sur l'arbre est éclairé et la lumière réfléchie est collectée et analysée à partir d'une pluralité d'emplacements autour de la circonférence de l'arbre, chacun présentant une séparation angulaire connue par rapport aux autres emplacements, et dans lequel les retards relatifs déterminés et directions d'axes optiques à chaque emplacement sont utilisés pour déterminer les charges de couple et axiales à chaque emplacement à partir desquelles le couple, les charges axiales et charges de flexion agissant sur l'arbre ainsi que l'axe de flexion de l'arbre sont déterminés.

15. Procédé selon l'une quelconque des revendications précédentes, dans lequel la charge de couple calculée agissant sur l'arbre est utilisée en relation avec la vitesse de rotation de l'arbre pour calculer la puissance transférée par l'arbre.

16. Procédé selon l'une quelconque des revendications précédentes, dans lequel, en plus des états de contrainte sur la surface de l'élément mécanique ou arbre, les états de contrainte dans la masse de l'élément mécanique ou arbre sont aussi calculés.

17. Dispositif destiné à mesurer des états de contrainte présents sur une surface d'un élément mécanique comprenant:

(a) un revêtement biréfringent (10) appliqué sur l'élément mécanique (11) de telle sorte que des états de contrainte présents à la surface de l'élément mécanique soient aussi amenés à être présents sur la surface du matériau biréfringent adjacent à l'élément mécanique, et avec une interface (13) entre le matériau biréfringent et l'élément mécanique qui assure la réflexion de la lumière qui est passée à travers le matériau biréfringent et dans lequel cette interface réfléchissante peut être soit la surface de l'élément mécanique soit un matériau placé sur celle-ci de manière à assurer cette réflexion ;

(b) une source (4) de lumière polarisée de manière circulaire ou elliptique présentant un spectre étendu simultanément avec des éléments optiques associés afin de diriger cette lumière polarisée sur le matériau biréfringent revêtant l'élément mécanique ;

(c) un moyen d'observation (42) comprenant des éléments optiques destinés à collecter une partie de la lumière qui est passée à travers le matériau biréfringent et qui a été renvoyée par réflexion à travers le matériau biréfringent par la surface réfléchissante et à transmettre cette lumière à travers un moyen polarisant ;

(d) un moyen de séparation spectrale (18) agencé de manière à recevoir en entrée la lumière qui est passée à travers le moyen polarisant, la sortie du moyen de séparation spectrale étant de la lumière séparée spectralement, et le moyen de séparation spectrale étant agencé de manière à relayer cette sortie de lumière séparée spectralement sur un moyen de mesure d'énergie (19) comprenant une pluralité de détecteurs ou éléments et agencé de telle sorte que chaque détecteur ou élément reçoive l'énergie lumineuse d'une partie différente du spectre séparé ;

(e) un moyen d'interface électronique (23) destiné à mesurer l'énergie reçue par chaque détecteur ou élément du détecteur d'énergie (19), et à former une représentation des niveaux d'énergie de lumière séparée spectralement et à mémoriser cette représentation de la répartition d'énergie spectrale continue dans un moyen de mémorisation ;

(f) un moyen de calcul (22) destiné à accéder au moyen de mémorisation et, selon des sous-programmes mémorisés qui ont été codés d'une manière appropriée pour assurer la commande du moyen de calcul, à démoduler la représentation de la répartition d'énergie spectrale continue et à déterminer le niveau de la biréfringence dans le matériau biréfringent revêtant l'élément mécanique en considérant la fréquence ou le profil de la fonction de répartition d'énergie démodulée ;

(g) d'autres sous-programmes mémorisés, qui ont été codés d'une manière appropriée pour assurer la commande du moyen de calcul, destinés à déterminer des états de contrainte présents sur la surface de l'élément mécanique dans son état revêtue par le matériau biréfringent et des états de contrainte qui pourraient être présents dans l'élément mécanique sous les mêmes conditions mais en l'absence du matériau biréfringent en utilisant des données se rapportant à la sensibilité optique du matériau biréfringent, à l'épaisseur du revêtement biréfringent, aux dimensions de l'élément, aux propriétés du matériau de l'élément, et au niveau de la biréfringence dans le matériau biréfringent revêtant l'élément mécanique.

18. Dispositif selon la revendication 17, dans lequel en (g) le moyen de calcul est, en outre, programmé pour calculer le pourcentage de la charge de service de sécurité et la proportion de charge de limite élastique à laquelle l'élément mécanique est soumis.

19. Dispositif selon la revendication 17, dans lequel l'élément mécanique comprend une partie d'un arbre et dans lequel en (g) le moyen de calcul est programmé pour calculer les charges de couple ou axiales ou combinaison de charges de couple et axiales agissant sur l'arbre en utilisant des entrée d'opérateur ou mémorisée antérieurement dans l'opération de décision concernant la ou les charges présentes ou celles qui semblent être présents sur l'arbre ou celles dont la mesure est requise.

20. Dispositif selon la revendication 17, dans lequel en (c) la lumière est transmise à travers une pluralité d'éléments polarisants de manière linéaire ou elliptique en parallèle, l'axe de polarisation de chacun étant placé suivant des orientations angulaires différentes l'une par rapport à l'autre et connues et suivant des orientations connues par rapport à une direction de référence du moyen d'observation et les orientations angulaires des axes d'éléments polarisants sont connues ou sont déterminées en utilisant un moyen de mesure angulaire afin de déterminer les différences angulaires entre les orientations angulaires des axes d'éléments polarisants et d'un axe de référence de l'élément mécanique ; et en (d) le moyen de séparation spectrale destiné à séparer spectralement la lumière est agencé de manière à recevoir la lumière provenant de la pluralité d'éléments polarisants en tant qu'entrées, et à séparer spectralement chaque entrée en parallèle et à relayer les sorties sur un moyen de mesure d'énergie ; et en (g) les directions des contraintes dans l'élément mécanique sont, en outre, calculées à partir des réponses spectrales et en utilisant les différences angulaires entre les axes d'éléments polarisants et l'axe de référence de l'élément mécanique.

21. Dispositif selon la revendication 20, dans lequel en (d) une pluralité de moyens de séparation spectrale et de moyens de mesure d'énergie est utilisée.

22. Dispositif selon la revendication 20, dans lequel en (g) le moyen de calcul calcule les charges agissant sur l'élément mécanique.

23. Dispositif selon la revendication 22, dans lequel l'élément mécanique comprend une partie d'un arbre et dans lequel en (g) le moyen de calcul est, en outre, programmé pour calculer les charges de couple et axiales agissant sur l'arbre.

24. Dispositif selon la revendication 23, dans lequel, en (b) l'éclairement est assuré par une pluralité de moyens d'éclairement, chacun étant orienté suivant des orientations angulaires différentes autour de la circonférence de l'arbre qui est revêtu avec le matériau biréfringent selon (a) et dans lequel, en (c) la lumière est reçue par une pluralité de moyens d'observation, chacun recevant de la lumière suivant une orientation angulaire connue autour de la circonférence de l'arbre, et dans lequel, en (d) la lumière provenant de chacun des éléments polarisants dans chacun des moyens d'observation est séparée spectralement, et dans lequel, en (g) le moyen de calcul est programmé pour calculer, en plus des charges de couple et axiales, la charge de flexion à laquelle l'arbre est soumis et l'axe suivant lequel se produit cette flexion.

Fig. 1

EP 0 778 460 B1

$SP^{**}_{0\text{-retardation}}(\lambda)$

500   600   700   800   900   (nm)

$\lambda \longrightarrow$

Fig. 2a

EP 0 778 460 B1

Fig. 2b

$SP_{o\,(no\,retardation)}^{created}(\lambda)$

500     600     700     800     900   (nm)

$\lambda \longrightarrow$

Fig. 2c

EP 0 778 460 B1

Fig. 3

EP 0 778 460 B1

Fig. 4

Zone: 1 2 3 4 5 6 7 8 9 10 11 12

Sine Function negative

Sine Function positive

Intensity Ratio

1.80
1.40
1.00
.600
.200

-80.0°   -40.0°   .000°   40.0°   80.0°

Angle between polarizer reference axis and optical axis

$I_2/I_0$

$I_1/I_0$

$I_3/I_0$

EP 0 778 460 B1

Fig. 5

180°

Plane of Bending

BP + 180°

Shaft -11

BP°

0° Reference Plane

Fig. 6a

EP 0 778 460 B1

Fig. 6b

EP 0 778 460 B1